# EUROPÄISCHE PATENTSCHRIFT

(11) **EP 1 747 412 B1**
(45) Veröffentlichungstag und Bekanntmachung des Hinweises auf die Patenterteilung: **23.01.2013**
(21) Anmeldenummer: 05735182.7
(22) Anmeldetag: 20.04.2005
(51) Int. Cl.: F25B 49/02, F24F 11/00

(54) **STEUEREINRICHTUNG FÜR EINE KÄLTE- ODER KLIMAANLAGE**
CONTROL UNIT FOR A REFRIGERATION OR AIR CONDITIONING DEVICE
DISPOSITIF DE COMMANDE POUR UNE INSTALLATION FRIGORIFIQUE OU DE CLIMATISATION

(30) Priorität: 18.05.2004 DE 102004024663
(43) Veröffentlichungstag der Anmeldung: 31.01.2007
(73) Patentinhaber: Emerson Climate Technologies GmbH, 71332 Waiblingen (DE)
(72) Erfinder: AUE, Peter, 71034 Böblingen (DE); NEJAD, Ali, R., 73614 Schorndorf-Weiler (DE); BERSCH, Hans-Jürgen, 52152 Simmerath (DE); KOWANZ, Bernd, 74613 Öhringen (DE)
(74) Vertreter: Manitz, Finsterwald & Partner GbR
(86) Internationale Anmeldenummer: PCT/EP2005/004240
(87) Internationale Veröffentlichungsnummer: WO 2005/116542

(56) Entgegenhaltungen:
- DE-A1- 3 220 420
- US-A- 5 475 986
- US-A1- 2003 010 046
- US-B1- 6 330 806

## Beschreibung

Die Erfindung betrifft eine Steuereinrichtung für ein Klima- oder Kältegerät mit einem innerhalb eines Gehäuses vorgesehenen Hauptprozessor zur Steuerung der Temperatur, des Lüfters und/oder des Abtauvorgangs eines Klima- oder Kältegeräts in Abhängigkeit von jeweils vorliegenden Ein-gangsgrößen. Eine Stenereinrichtung gemäβ dem berbegriff des Anspruchs 1 ist aus der US-A-5 475 986 bekannt.

Steuereinrichtungen für Klima- oder Kältegeräte sind in unterschiedlichsten Ausführungsformen aus dem Stand der Technik bekannt. Einfachere Klima- oder Kältegeräte sind mit auf mechanischen Prinzipien basierenden Steuereinrichtungen ausgestattet, wohingegen höherwertige Klima- oder Kältegeräte oftmals elektronische Steuereinrichtungen der vorstehend genannten Art besitzen, bei denen ein Mikroprozessor sämtliche Steuer- oder Regelvorgänge kontrolliert. Neben der gewünschten Raum- oder Kühltemperatur können im Bedarfsfall auch noch das An- und Abschalten bzw. die Drehzahl eines Lüfters sowie das Auslösen und Beenden eines Abtauvorgangs und eventuell auch noch weitere Vorgänge vom Mikroprozessor kontrolliert werden.

Klima- und Kältegeräte weisen ferner generell einen Kältemittelkreislauf auf, in dem in Strömungsrichtung nacheinander ein Verdichter, ein Verflüssiger, ein Expansionsventil sowie ein Verdampfer angeordnet sind. Für einen zuverlässigen und effizienten Betrieb des Kältemittelkreislaufs muss durch eine geeignete Ansteuerung des Expansionsventils sichergestellt werden, dass das zum Verdampfer gelangende Kältemittel im Verdampfer möglichst vollständig verdampft wird. Um dieses Ziel bestmöglich zu realisieren, werden zunehmend elektronisch angesteuerte Expansionsventile eingesetzt, welche gegenüber den ansonsten üblichen Thermo-Expansionsventilen Vorteile bezüglich der Genauigkeit der zu erzielenden Regelung besitzen.

Elektronisch angesteuerte Expansionsventile sind jedoch vergleichsweise teuer und benötigen darüber hinaus im Unterschied zu Thermo-Expansionsventilen eine eigene elektronische Überhitzungsregelung zur Verarbeitung von vom Kältemittelkreislauf kommenden Sensorsignalen. Neben dem zusätzlichen Kostenaufwand für ein elektronisch angesteuertes Expansionsventil ist also zusätzlich noch Aufwand hinsichtlich der elektronischen Überhitzungsregelung sowie hinsichtlich der eigens für die Überhitzungsregelung nötigen Sensorik zu betreiben.

Eine Aufgabe der Erfindung besteht folglich darin, eine Steuereinrichtung der eingangs genannten Art derart weiterzubilden, dass der Einsatz von elektronisch angesteuerten Expansionsventilen mit verringertem Aufwand möglich wird.

Erfindungsgemäß wird diese Aufgabe durch die Merkmale des Anspruchs 1 und insbesondere dadurch gelöst, dass innerhalb des eingangs erwähnten Gehäuses Kontaktstellen für einen vom Hauptprozessor getrennten Coprozessor vorgesehen sind, denen jeweils Ein- und/oder Ausgangssignale des Coprozessors zugeordnet sind, wobei zumindest eine Kontaktstelle für von Temperatur- und/oder Drucksensoren eines Kältekreislaufs bereitgestellte Coprozessor-Eingangssignale und eine Kontaktstelle für ein Coprozessor-Ausgangssignal zur Ansteuerung eines im Kältekreislauf vorgesehenen elektronischen Expansionsventils vorgesehen sind.

Im Rahmen der Erfindung wurde erkannt, dass in Fachkreisen seit der Verfügbarkeit von elektronisch angesteuerten Expansionsventilen das Vorurteil bestand, dass die eigentliche Steuer- bzw. Regelschaltung von Klima- oder Kältegeräten, mittels welcher beispielsweise die zu erzielende Temperatur einstellbar ist, strikt von derjenigen Steuer- bzw. Regelschaltung zu trennen ist, welche das elektronische Expansionsventil, insbesondere dessen Schrittmotor, ansteuert. Obwohl die beiden genannten Steuer- bzw. Regelschaltungen seit jeher in getrennten Gehäusen untergebracht werden, und zwar ohne dass sie in irgendeiner Weise zusammenwirken, wurde erfindungsgemäß erkannt, dass die beiden genannten Steuer- bzw. Regelschaltungen gemeinsam innerhalb eines einzigen Gehäuses angeordnet werden können, wobei sich auf diese Weise nicht nur Einsparungen beim Gehäuse sondern auch Synergien beim Betrieb der beiden Prozessoren ergeben, welche für die beiden genannten Regelungen bzw. Steuerungen zuständig sind.

Ein besonderer Vorteil der Erfindung ist darin zu sehen, dass der für die Regelung bzw. Steuerung des elektronischen Expansionsventils zuständige Coprozessor beim Vertrieb der erfindungsgemäßen Steuereinrichtung noch nicht zwangsläufig in dieser vorhanden sein muss. Vielmehr ist durch die erfindungsgemäß vorgesehenen Kontaktstellen auch erst zu einem späteren Zeitpunkt ein Nachrüsten des Coprozessors möglich. Wenn demzufolge beim Einsatz einer erfindungsgemäßen Steuereinrichtung ein Klima- oder Kältegerät zuerst mit einem Thermo-Expansionsventil verkauft wird und anschließend eine Umrüstung auf ein elektronisch angesteuertes Expansionsventil stattfinden soll, ist dies erfindungsgemäß ohne großen Aufwand möglich, da lediglich die hierfür nötige Sensorik nachgerüstet und der Coprozessor an seine dafür vorgesehene Stelle im Gehäuse eingesetzt werden muss. Die beschriebene Möglichkeit des Nachrüstens stellt einen ganz wesentlichen wirtschaftlichen Vorteil dar, da damit zu rechnen ist, dass in der Zukunft in hohem Maße Thermo-Expansionsventile durch elektronisch angesteuerte Expansionsventile ersetzt werden.

Der erfindungsgemäß einsetzbare Coprozessor muss dazu in der Lage sein, auf einen hinterlegten Algorithmus für die Überhitzungsregelung bzw. die Ansteuerung des elektronischen Expansionsventils zuzugreifen. Ein derartiger Algorithmus kann entweder in einem Speicher hinterlegt sein, welcher gemeinsam mit dem Coprozessor nachrüstbar ist, er kann sich aber auch im Coprozessor selbst befinden. Falls der Speicherbaustein für den genannten Algorithmus separat vom Coprozessor nachrüstbar ist, ergibt sich der Vorteil, dass die erfindungsgemäße Steuereinrichtung zu beliebigen Zeitpunkten problemlos mit jeweils zur Verfügung stehenden Updates des genannten Algorithmus versehen werden kann.

Neben der Überhitzungsregelung und der Ansteuerung des elektronischen Expansionsventils kann der erfindungsgemäß nachrüstbare Coprozessor auch für die Regelung des Saugdrucks und/oder des Verflüssigungsdrucks zuständig sein, wobei er hierfür wiederum auf geeignete Algorithmen zugreifen muss.

Die erfindungsgemäß vorgesehenen Kontaktstellen für den Coprozessor können beispielsweise als Löt- oder Steckplätze ausgebildet sein, so dass ein nachträgliches Kontaktieren des Coprozessors ohne großen Aufwand möglich wird.

Die erfindungsgemäße Steuereinrichtung wird bevorzugt am Ort des Verdampfers eingesetzt, welcher sich im jeweiligen Kältemittelkreislauf befindet. Es ist somit möglich, die erfindungsgemäße Steuereinrichtung beispielsweise gemeinsam mit dem Verdampfer innerhalb einer Kühltruhe anzuordnen.

Haupt- und Coprozessor können auf einer gemeinsamen Hauptplatine vorgesehen werden, welche innerhalb des gemeinsamen Gehäuses angeordnet ist. Es genügt in diesem Fall, wenn lediglich eine einzige Elektronik-Platine, nämlich die genannte Hauptplatine, eingesetzt wird, auf welcher sich dann nicht nur der Hauptprozessor, sondern auch die Kontaktstellen für den Coprozessor befinden. Alternativ wäre es jedoch auch möglich, für den Coprozessor eine separate, vom Hauptprozessor getrennte Platine vorzusehen.

Vorteilhaft ist es, wenn der Coprozessor als integrierter, direkt an die Kontaktstellen der Hauptplatine anzuschließender Hybridschaltkreis oder als Chip ausgebildet ist. Der Coprozessor kann weiterhin auf einer Kleinplatine angeordnet werden, welche ihrerseits über die Kontaktstellen der Hauptplatine mit dieser koppelbar ist. Auf der genannten Kleinplatine lassen sich dann beispielsweise auch Speicherbausteine unterbringen, in denen die für den Coprozessor benötigten Algorithmen gespeichert sind.

Die Kontaktstellen von Haupt- und Coprozessor sind bevorzugt über Datenleitungen miteinander verbunden, so dass eine Kommunikation zwischen Haupt- und Coprozessor möglich ist.

Dies ermöglicht dann beispielsweise, dass der Coprozessor über den Hauptprozessor konfigurierbar wird, wobei vom Hauptprozessor insbesondere Kältekreislauf-Parameter, wie zum Beispiel Überhitzung, Saugdruckbegrenzung und Kältemitteltyp, vorgebbar sind. Auf diese Weise kann dann letztlich über den Hauptprozessor der gesamte, im Kältemittelkreislauf stattfindende Prozess kontrolliert, überwacht und gesteuert werden.

Über die genannten Datenleitungen zwischen Haupt- und Coprozessor können auch Informationen vom Coprozessor an den Hauptprozessor geliefert werden. So kann der Hauptprozessor beispielsweise über Sensordaten informiert werden, die dem Coprozessor zur Verfügung stehen, oder es kann der Öffnungsgrad des elektronischen Expansionsventils an den Hauptprozessor gemeldet werden.

Vorteilhaft ist es ferner, wenn dem Haupt- und Coprozessor ein gemeinsames Eingabemedium zugeordnet ist, über welches sowohl im Haupt- als auch im Coprozessor ablaufende Programme beeinflussbar sind. Hierdurch ergibt sich eine weitere Einsparung, da für den Coprozessor nicht wie bei aus dem Stand der Technik bekannten Vorrichtungen separate Eingabemedien vorgesehen werden müssen.

Eine weitere Einsparungsmöglichkeit wird dann realisiert, wenn dem Haupt- und dem Coprozessor eine gemeinsame, von der Außenseite des Gehäuses zugängliche Datenschnittstelle zugeordnet wird, über welche sowohl im Haupt- als auch im Coprozessor ablaufende Programme beeinflussbar sind. Bei dieser erfindungsgemäßen Variante lassen sich beispielsweise Programm-Updates sowohl für den Haupt-, als auch für den Coprozessor über eine einheitliche Datenschnittstelle gemeinsam einspielen, ohne dass in die Hardware der erfindungsgemäßen Steuereinrichtung eingegriffen werden muss.

Hinsichtlich der mit der Realisierung der erfindungsgemäßen Lösung verbundenen Kosten ist es schließlich auch noch von Vorteil, wenn dem Haupt- und dem Coprozessor ein gemeinsames Anzeigemedium zugeordnet wird, über welches Ausgangssignale sowohl des Haupt- als auch des Coprozessors darstellbar sind. Diese Darstellung kann dabei beispielsweise visuell oder akustisch erfolgen und den Öffnungszustand des Expansionsventils, die eingestellte Temperatur, den Betriebszustand (Ein/Aus; Normalbetrieb oder Abtaubetrieb) oder Alarmzustände betreffen.

Weitere bevorzugte Ausführungsformen der Erfindung sind in den Unteransprüchen genannt.

Die Erfindung wird nachfolgend anhand von einem Ausführungsbeispiel unter Bezugnahme auf die Figuren beschrieben; in diesen zeigen:
- Fig. 1: ein Blockschaltbild der erfindungsgemäß zusammenwirkenden Komponenten, und
- Fig. 2: eine schematische Ansicht einer Hauptplatine mit Haupt- und Coprozessor.

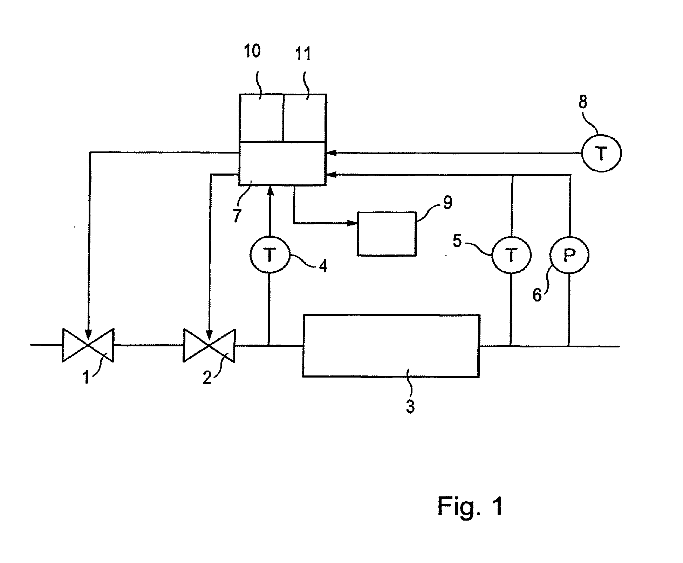

Innerhalb eines in Fig. 1 nur bereichsweise dargestellten Kältemittelkreislaufs sind nacheinander in Strömungsrichtung des Kältemittels angeordnet ein Magnetventil 1, ein elektronisches Expansionsventil 2 sowie ein Verdampfer 3. Im Rahmen des normalen Kältemittelkreislaufs, der bei einer kühlenden bzw. klimatisierenden Wirkung des Verdampfers 3 gegeben ist, strömt das Kältemittel also in flüssiger Form zuerst durch das Magnetventil 1 und anschließend durch das elektronische Expansionsventil 2, woraufhin es im Verdampfer 3 verdampft wird.

Alle in Fig. 1 dargestellten Komponenten können räumlich relativ nahe beieinander angeordnet sein, beispielsweise innerhalb einer Kühltruhe. Alternativ ist es jedoch beispielsweise hinsichtlich des Magnetventils 1 auch möglich, dieses entfernt von einer Kühltruhe, z.B. in einem Kontrollraum, vorzusehen.

In Strömungsrichtung ist dem Verdampfer 3 ein Temperatursensor 4 vorgeschaltet und ein weiterer Temperatursensor 5 nachgeschaltet. Parallel zum Temperatursensor 5 ist weiterhin ein Drucksensor 6 angeordnet, der alternativ zum Temperatursensor 4 vorgesehen sein kann. Die Sensoren 4, 5 und/oder 6 liefern Temperatur- und/oder Drucksignale an eine erfindungsgemäße Steuereinrichtung 7, welche beim Normalbetrieb der dargestellten Anordnung unter anderem den jeweiligen Öffnungsgrad des elektronischen Expansionsventils 2 regelt. In üblicher Weise wird das elektronische Expansionsventil 2 dabei derart geregelt, dass innerhalb des Verdampfers 3 eine möglichst vollständige Verdampfung des dem Verdampfer 3 zugeführten Kühlmittels stattfindet.

Das ebenfalls von der Steuereinrichtung 7 beaufschlagte Magnetventil 1 kann eingesetzt werden, um den Kältemittelkreislauf beispielsweise zum Zweck eines Abtauvorgangs zu unterbrechen und/oder um den Durchfluss des Kältemittels in Abhängigkeit von der jeweils gewünschten Kühltemperatur zu regeln.

Es ist ferner ein Raumtemperatursensor 8 vorgesehen, welcher die jeweils aktuelle Raumtemperatur an die erfindungsgemäße Steuereinrichtung 7 meldet.

Im Bereich des Verdampfers 3 ist schließlich auch noch ein Lüfter 9 vorgesehen, welcher von der Steuereinrichtung 7 mit Steuersignalen beaufschlagt wird.

Die Steuereinrichtung 7 ist mit einem Eingabemedium 10 sowie einem Display 11 verbunden, wobei über das Eingabemedium 10 Befehle an die Steuereinrichtung 7 übermittelt werden können und das Display 11 zur Anzeige von Informationen ausgelegt ist, welche von der Steuereinrichtung 7 zur Verfügung gestellt werden.

Beim Betrieb der Vorrichtung gemäß Fig. 1 steuert die Steuereinrichtung 7 in Abhängigkeit von über das Eingabemedium 10 eingegebenen Befehlen und von vom Raumtemperatursensor 8 gelieferten Signalen das Magnetventil 1 und den Lüfter 9 derart an, dass sich der jeweils gewünschte Betriebsmodus einstellt. Ferner steuert die Steuereinrichtung 7 den Öffnungsgrad des elektronischen Expansionsventils 2 in Abhängigkeit von Signalen, die von den Sensoren 4, 5 und/oder 6 geliefert werden.

Die Steuereinrichtung 7 ist somit sowohl für die Steuerung der zu erzielenden Kühltemperatur, der nötigen Lüfterleistung und gegebenenfalls eines Abtauvorgangs als auch für die Steuerung des Expansionsventils 2 zuständig. Dabei kann die Steuereinrichtung 7 mit Haupt- und Coprozessor so ausgebildet sein, wie dies vorstehend bereits erläutert wurde.

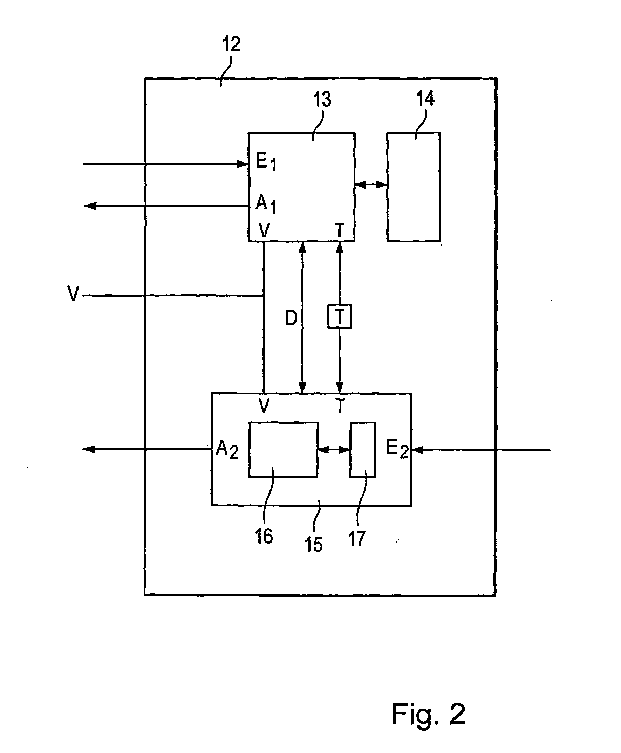

Fig. 2 zeigt eine Hauptplatine 12, wie sie innerhalb einer Steuereinrichtung 7 gemäß Fig. 1 vorgesehen werden kann. Die Hauptplatine 12 weist einen Hauptprozessor 13 auf, welcher auf einen Speicher 14 zugreift, in welchem Algorithmen und Programme für den Hauptprozessor 13 gespeichert sind.

Über den mindestens einen Port E₁ empfängt der Hauptprozessor 13 Signale, beispielsweise Signale, die von einem Raumtemperatursensor 8 oder einem Eingabemedium 10 gemäß Fig. 1 herrühren. Weiterhin verfügt der Hauptprozessor 13 über mindestens einen Port A₁, über den Signale abgegeben werden können, beispielsweise Signale zur Ansteuerung eines Magnetventils 1 oder eines Lüfters 9 gemäß Fig. 1.

Auf der Hauptplatine 12 ist ferner eine Hilfsplatine 15 verlötet, auf welcher ein Coprozessor 16 sowie ein dem Coprozessor 16 zugeordneter Speicher 17 angeordnet sind. Im Speicher 17 sind wiederum Algorithmen bzw. Programme für den Coprozessor 16 gespeichert.

Über den mindestens einen Port A₂ der Hilfsplatine 15 können vom Coprozessor 16 erzeugte Signale ausgesandt werden. Hierbei kann es sich beispielsweise um ein Signal zur Ansteuerung eines elektronischen Expansionsventils 2 gemäß Fig. 1 handeln.

Über mindestens einen weiteren Port E₂ können der Hilfsplatine und dem darauf angeordneten Coprozessor 16 Signale zugeführt werden, wobei es sich hier beispielsweise um Signale von den Temperatursensoren 4, 5 und/oder dem Drucksensor 6 gemäß Fig. 1 handeln kann.

Über die Ports A₁ und A₂ von Haupt- und Coprozessor 13, 16 können ferner Signale an ein Display 11 gemäß Fig. 1 gesandt werden. Folglich sind die auf der Hauptplatine 12 vorhandenen Komponenten dazu in der Lage, sämtliche Steuer-, Regel- und Anzeigefunktionen zu kontrollieren, welche für den Betrieb eines Klima- oder Kältegeräts gemäß Fig. 1 nötig sind.

Beide Prozessoren 13, 16 werden über eine gemeinsame Spannungsversorgung V versorgt und werden von einem gemeinsamen Taktsignal T beaufschlagt, so dass erfindungsgemäß keine separaten Spannungsversorgungen und Taktgeneratoren für Hauptprozessor 13 und Coprozessor 16 nötig sind.

Schließlich besteht zwischen Hauptprozessor 13 und Coprozessor 16 eine datentechnische Verbindung D, über welche ein Datenaustausch zwischen Hauptprozessor 13 und Coprozessor 16 zu den vorstehend bereits beschriebenen Zwecken erfolgen kann. Insbesondere kann der Coprozessor 16 vom Hauptprozessor 13 darüber informiert werden, wann ein Abtauvorgang läuft, damit er während eines solchen Abtauvorgangs das Expansionsventil 2 gemäß Fig. 1 in einen statischen Zustand, insbesondere in seinen Öffnungszustand bewegen kann.

### Bezugszeichenliste

- 1: Magnetventil
- 2: elektronisches Expansionsventil
- 3: Verdampfer
- 4: Temperatursensor
- 5: Temperatursensor
- 6: Drucksensor
- 7: Steuereinrichtung
- 8: Raumtemperatursensor
- 9: Lüfter
- 10: Eingabemedium
- 11: Display
- 12: Hauptplatine
- 13: Hauptprozessor
- 14: Speicher
- 15: Hilfsplatine
- 16: Coprozessor
- 17: Speicher

## Patentansprüche

1. Steuereinrichtung (7) für ein Klima- oder Kältegerät mit einem innerhalb eines Gehäuses vorgesehenen Hauptprozessor (13) zur Steuerung der Temperatur, des Lüfters (9) und/oder des Abtauvorgangs eines Klima- oder Kältegeräts in Abhängigkeit von jeweils vorliegenden Eingangsgrößen,
**dadurch gekennzeichnet,**
**dass** innerhalb des Gehäuses Kontaktstellen für einen vom Hauptprozessor (13) getrennten Coprozessor (16) vorgesehen sind, denen jeweils Ein- und/oder Ausgangssignale des Coprozessors zugeordnet sind, wobei zumindest eine Kontaktstelle für von Temperatur- und/oder Drucksensoren (4, 5, 6) eines Kältekreislaufs bereitgestellte Coprozessor-Eingangssignale und eine Kontaktstelle für ein Coprozessor-Ausgangssignal zur Ansteuerung eines im Kältekreislauf vorgesehenen elektronischen Expansionsventils (2) vorgesehen sind.

2. Steuereinrichtung nach Anspruch 1,
**dadurch gekennzeichnet,**
**dass** Haupt- und Coprozessor (13, 16) auf einer gemeinsamen Hauptplatine (12) vorgesehen sind, welche innerhalb des gemeinsamen Gehäuses angeordnet ist.

3. Steuervorrichtung nach einem der vorhergehenden Ansprüche,
**dadurch gekennzeichnet,**
**dass** der Coprozessor (16) als integrierter, direkt an die Kontaktstellen der Hauptplatine (12) anzuschließender Hybridschaltkreis oder Chip ausgebildet ist.

4. Steuervorrichtung nach einem der vorhergehenden Ansprüche,
**dadurch gekennzeichnet,**
**dass** der Coprozessor (16) auf einer Kleinplatine (15) angeordnet ist, welche über die Kontaktstellen der Hauptplatine (12) mit dieser koppelbar ist.

5. Steuervorrichtung nach einem der vorhergehenden Ansprüche,
**dadurch gekennzeichnet,**
**dass** Kontaktstellen von Haupt- und Coprozessor (13, 16) über Datenleitungen miteinander verbunden sind.

6. Steuervorrichtung nach einem der vorhergehenden Ansprüche,
**dadurch gekennzeichnet,**
**dass** der Coprozessor (16) über den Hauptprozessor (13) konfigurierbar ist, wobei vom Hauptprozessor (13) insbesondere Kältekreislauf-Parameter, wie z.B. Überhitzung, Saugdruckbegrenzung und Kältemitteltyp, vorgebbar sind.

7. Steuervorrichtung nach einem der vorhergehenden Ansprüche,
**dadurch gekennzeichnet,**
**dass** dem Haupt- und dem Coprozessor (13, 16) ein gemeinsames Eingabemedium (10) zugeordnet ist, über welches sowohl im Hauptals auch im Coprozessor (13, 16) ablaufende Programme beeinflussbar sind.

8. Steuervorrichtung nach einem der vorhergehenden Ansprüche,
**dadurch gekennzeichnet,**
**dass** dem Haupt- und dem Coprozessor (13, 16) eine gemeinsame, von der Außenseite des Gehäuses zugängliche Datenschnittstelle zugeordnet ist, über welche sowohl im Haupt- als auch im Coprozessor (13, 16) ablaufende Programme beeinflussbar sind.

9. Steuervorrichtung nach einem der vorhergehenden Ansprüche,
**dadurch gekennzeichnet,**
**dass** dem Haupt- und dem Coprozessor (13, 16) ein gemeinsames Anzeigemedium (11) zugeordnet ist, über welches Ausgangssignale sowohl des Haupt- als auch des Coprozessors (13, 16) darstellbar sind.

## Claims

1. A control device (7) for an air conditioning or refrigeration unit comprising a main processor (13) provided inside a housing for the control of the temperature, of the fan (9) and/or of the defrosting procedure of an air conditioning or refrigeration unit in dependence on respectively prevailing input values,
**characterized in that**
contact points are provided inside the housing for a coprocessor (16) separate from the main processor (13), with respective input and/or output signals of the coprocessor being associated with said contact points, with at least one contact point being provided for coprocessor input signals made available by temperature sensors and/or pressure sensors (4, 5, 6) of a coolant circuit and one contact point being provided for a coprocessor output signal for the control of an electronic expansion valve (2) provided in the coolant circuit.

2. A control device in accordance with claim 1, **characterized in that** the main processor and the coprocessor (13, 16) are provided on a common main board (12) which is arranged inside the common housing.

3. A control device in accordance with any one of the preceding claims,
**characterized in that** the coprocessor (16) is made as an integrated hybrid circuit or chip to be connected directly to the contact points of the main board (12).

4. A control device in accordance with any one of the preceding claims,
**characterized in that** the coprocessor (16) is arranged on a small board (15) which can be coupled to the main board (12) via the contact points of the main board.

5. A control device in accordance with any one of the preceding claims,
**characterized in that** contact points of the main processor and coprocessor (13, 16) are connected to one another via data lines.

6. A control device in accordance with any one of the preceding claims,
**characterized in that** the coprocessor (16) is configurable via the main processor (13), with in particular coolant circuit parameters such as overheating, suction pressure limitation and coolant type being able to be preset by the main processor (13).

7. A control device in accordance with any one of the preceding claims,
**characterized in that** a common input medium (10) is associated with the main processor and the coprocessor (13, 16) and programs which run both in the main processor and in the coprocessor (13, 16) can be influenced via it.

8. A control device in accordance with any one of the preceding claims,
**characterized in that** a common data interface is associated with the main processor and the common processor (13, 16) which is accessible from the outside of the housing and via which programs which run both in the main processor and the coprocessor (13, 16) can be influenced.

9. A control device in accordance with any one of the preceding claims,
**characterized in that** a common display medium (11) is associated with the main processor and the coprocessor (13, 16) via which output signals of both the main processor and the coprocessor (13, 16) can be displayed.

## Revendications

1. Dispositif de commande (7) pour un appareil de climatisation ou un appareil frigorifique comprenant un processeur principal (13) prévu à l'intérieur d'un boîtier pour la commande de la température, du ventilateur (9) et/ou du processus de dégivrage d'un appareil de climatisation ou d'un appareil frigorifique en fonction de grandeurs d'entrée respectivement en présence,
**caractérisé en ce que** des points de contact pour un coprocesseur (16) séparé du processeur principal (13) sont prévus à l'intérieur du boîtier, auquel sont associés respectivement des signaux d'entrée et/ou de sortie du coprocesseur, dans lequel au moins un point de contact est prévu pour des signaux d'entrée de coprocesseur mis à disposition par des capteurs de température et/ou de pression (4, 5, 6) d'un circuit frigorifique, et un point de contact est prévu pour un signal de sortie de coprocesseur destiné au pilotage d'une soupape d'expansion électronique (2) prévue dans le circuit frigorifique.

2. Dispositif de commande selon la revendication 1,
**caractérisé en ce que** le processeur principal et le coprocesseur (13, 16) sont prévus sur une platine principale commune (12) qui est agencée à l'intérieur du boîtier commun.

3. Dispositif de commande selon l'une des revendications précédentes,
**caractérisé en ce que** le coprocesseur (16) est réalisé sous forme de circuit hybride ou de puce intégré(e) à raccorder directement aux points de contact de la platine principale (12).

4. Dispositif de commande selon l'une des revendications précédentes,
**caractérisé en ce que** le coprocesseur (16) est agencé sur une petite platine (15), laquelle peut être accouplée avec la platine principale (12) via les points de contact de celle-ci.

5. Dispositif de commande selon l'une des revendications précédentes,
**caractérisé en ce que** les points de contact du processeur principal et du coprocesseur (13, 16) sont reliés les uns aux autres via des lignes de données.

6. Dispositif de commande selon l'une des revendications précédentes,
**caractérisé en ce que** le coprocesseur (16) est susceptible d'être configuré via le processeur principal (13), et des paramètres du circuit frigorifique, comme par exemple une surchauffe, une limitation de la pression d'aspiration et le type d'agent réfrigérant, peuvent en particulier être imposés par le processeur principal (13).

7. Dispositif de commande selon l'une des revendications précédentes,
**caractérisé en ce qu'**un support de saisie commun (10) est associé au processeur principal et au coprocesseur (13, 16), au moyen duquel des programmes qui se déroulent aussi bien dans le processeur principal que dans le coprocesseur (13, 16) peuvent être influencés.

8. Dispositif de commande selon l'une des revendications précédentes,
**caractérisé en ce qu'**une interface de données commune, accessible depuis le côté extérieur du boîtier, est associée au processeur principal et au coprocesseur (13, 16), via laquelle des programmes qui se déroulent aussi bien dans le processeur principal que dans le coprocesseur (13, 16) peuvent être influencés.

9. Dispositif de commande selon l'une des revendications précédentes,
**caractérisé en ce qu'**un support d'affichage commun (11) est associé au processeur principal et au coprocesseur (13, 16), au moyen duquel des signaux de sortie provenant aussi bien du processeur principal que du coprocesseur (13, 16) peuvent être représentés.
